(19) Europäisches Patentamt
European Patent Office
Office européen des brevets

(11) **EP 4 411 916 A1**

(12) **EUROPEAN PATENT APPLICATION**
published in accordance with Art. 153(4) EPC

(43) Date of publication:
**07.08.2024 Bulletin 2024/32**

(21) Application number: **22876175.5**

(22) Date of filing: **27.09.2022**

(51) International Patent Classification (IPC):
$H01M\ 10/052^{(2010.01)}$      $H01M\ 4/133^{(2010.01)}$
$H01M\ 4/36^{(2006.01)}$      $H01M\ 4/38^{(2006.01)}$
$H01M\ 4/505^{(2010.01)}$      $H01M\ 4/525^{(2010.01)}$
$H01M\ 4/587^{(2010.01)}$

(52) Cooperative Patent Classification (CPC):
H01M 4/133; H01M 4/36; H01M 4/38; H01M 4/505;
H01M 4/525; H01M 4/587; H01M 10/052;
Y02E 60/10

(86) International application number:
**PCT/JP2022/035831**

(87) International publication number:
**WO 2023/054308 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021 JP 2021161710**

(71) Applicant: **Panasonic Intellectual Property
Management Co., Ltd.
Kadoma-shi, Osaka 571-0057 (JP)**

(72) Inventor: **FUKAMICHI, Noriko
Kadoma-shi, Osaka 571-0057 (JP)**

(74) Representative: **Novagraaf International SA
Chemin de l'Echo 3
1213 Onex, Geneva (CH)**

(54) **NON-AQUEOUS ELECTROLYTE SECONDARY BATTERY**

(57)    A nonaqueous electrolyte secondary battery in which: a positive electrode active material includes first and second composite oxide particles each having a Ni proportion in metal elements other than Li of 50 at.% or more; the first and second composite oxide particles respectively have average particle diameters D1 and D2 satisfying $1\ \mu m \le D1 \le 6\ \mu m$ and $8\ \mu m \le D2 \le 20\ \mu m$; a negative electrode active material includes a graphite material, and a Si-containing material; the graphite material includes first and second graphite particles having first and second internal void percentages P1 and P2, respectively, satisfying $P1 < P2$; when the negative electrode mixture layer is divided into first and second regions having the same thickness, and the first region is closer to the positive electrode than the second region, the first graphite particles are contained more in the first region than in the second region; and average values Pf (14% or less) and Ps of internal void percentages of the graphite material contained respectively in the first and second regions satisfy $Pf < Ps$.

FIG .1

**Description**

[Technical Field]

The present disclosure relates to a nonaqueous electrolyte secondary battery.

[Background Art]

Nonaqueous electrolyte secondary batteries, such as lithium-ion secondary batteries, have high output power and high energy density and are, therefore, expected as power sources for small consumer application, power storage devices, and electric cars.

Patent Literature 1 proposes a positive electrode active material for a lithium battery, including a first lithium-nickel composite oxide having a volume particle size distribution of 3.0 $\mu$m $\leq$ D25 $\leq$ 10.0 $\mu$m, 5.0 $\mu$m $\leq$ D50 $\leq$ 20.0 $\mu$m, and 10.0 $\mu$m $\leq$ D75 $\leq$ 25.0 $\mu$m as measured by a particle size analyzer, and a second lithium-nickel composite oxide having a volume particle size distribution of 0.01 $\mu$m $\leq$ D25 $\leq$ 5.0 $\mu$m, 1.0 $\mu$m $\leq$ D50 $\leq$ 10.0 $\mu$m, and 5.0 $\mu$m $\leq$ D75 $\leq$ 15.0 $\mu$m as measured by a particle size analyzer. The first lithium-nickel composite oxide has a higher nickel atom content, which is the proportion of nickel atoms in the chemical formula, than the second lithium-nickel composite oxide. The content of the first lithium-nickel composite oxide is 80 to 97 wt%, and the content of the second lithium-nickel composite oxide is 3 to 20 wt%, each relative to the total weight of the positive electrode active material.

The literature says that, according to the above configuration, the packing density of the positive electrode can be increased, the thermal stability can be ensured, and the capacity can be improved.

[Citation List]

[Patent Literature]

Patent Literature 1: Japanese Laid-Open Patent Publication No. 2011-216485 (Japanese Patent No. 5868604)

[Summary of Invention]

[Technical Problem]

However, in general, when a positive electrode active material in the form of small particles is used, the BET specific surface area increases, and the side reaction on the surface of the positive electrode active material increases. Furthermore, when the packing density of a positive electrode active material is improved, the electrolyte permeability within the positive electrode tends to decrease during rapid charge-discharge cycles, and the capacity retention rate tends to decrease. In short, in a nonaqueous electrolyte secondary battery including a positive electrode with high capacity and high density, the durability tends to be reduced.

[Solution to Problem]

In view of the above, one aspect of the present disclosure relates to a nonaqueous electrolyte secondary battery, including: a positive electrode; a negative electrode; and a nonaqueous electrolyte, wherein: the positive electrode includes a positive electrode current collector, and a positive electrode mixture layer containing a positive electrode active material and disposed on a surface of the positive electrode current collector; the positive electrode active material includes first composite oxide particles containing Li and Ni, and second composite oxide particles containing Li and Ni; the first composite oxide particles have a first average particle diameter D1 satisfying 1 $\mu$m $\leq$ D1 $\leq$ 6 $\mu$m, and a proportion of Ni in metal elements other than Li in the first composite oxide particles is 50 at.% or more; the second composite oxide particles have a second average particle diameter D2 satisfying 8 $\mu$m $\leq$ D2 $\leq$ 20 $\mu$m, and a proportion of Ni in metal elements other than Li in the second composite oxide particles is 50 at.% or more; the negative electrode includes a negative electrode current collector, and a negative electrode mixture layer containing a negative electrode active material and disposed on a surface of the negative electrode current collector; the negative electrode active material includes a graphite material, and a Si-containing material; the graphite material includes first graphite particles having a first internal void percentage P1 and second graphite particles having a second internal void percentage P2 satisfying P1 < P2; when the negative electrode mixture layer is divided into a first region and a second region having the same thickness, and the first region is closer to the positive electrode than the second region, the first graphite particles are contained more in the first region than in the second region; an average value Pf of the internal void percentage of the graphite material contained in the first region is 14% or less; and the average value Pf is smaller than an average value Ps of the internal void percentage of the graphite material contained in the second region.

[Advantageous Effects of Invention]

According to the present disclosure, it is possible to improve the durability of a nonaqueous electrolyte secondary battery including a high-capacity positive electrode.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawings]

[FIG. 1] A schematic diagram of a cross section of a graphite particle according to an embodiment of the present disclosure.
[FIG. 2] A schematic diagram of a cross section of a negative electrode according to an embodiment of the present disclosure.
[FIG. 3] A longitudinal cross-sectional view of a nonaqueous liquid electrolyte secondary battery according to an embodiment of the present disclosure.

[Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, the phrase "a numerical value A to a numerical value B" means to include the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

The present disclosure encompasses a combination of matters recited in any two or more claims selected from plural claims in the appended claims. In other words, as long as no technical contradiction arises, matters recited in any two or more claims selected from plural claims in the appended claims can be combined.

In the following description, the term "comprise" or "include" is an expression including meanings of "comprise (or include)," "essentially consist of," and "consist of."

Secondary batteries include at least nonaqueous electrolyte secondary batteries, such as lithium-ion batteries and lithium-metal secondary batteries, and all-solid-state batteries.

A nonaqueous electrolyte secondary battery according to an embodiment of the present disclosure includes a positive electrode, a negative electrode, and a nonaqueous electrolyte. A separator is usually interposed between the positive electrode and the negative electrode. The positive electrode, the negative electrode, and the separator constitute an electrode group. The electrode group is housed together with the nonaqueous electrolyte in an outer body. For example, a cylindrical electrode group is formed by winding a positive electrode and a negative electrode with a separator interposed therebetween, or a stacked electrode group is formed by stacking a positive electrode and a negative electrode with a separator interposed therebetween. However, the form of the electrode group is not limited to a particular one. The form of the nonaqueous electrolyte secondary battery is also not limited, and may be, for example, cylindrical, prismatic, coin-shaped, button-shaped, laminated, and the like.

In the following, a detailed description will be given of the nonaqueous electrolyte secondary battery according to an embodiment of the present disclosure. The nonaqueous electrolyte secondary battery includes, for example, a positive electrode, a negative electrode, a nonaqueous electrolyte, and a separator as described below.

[Positive electrode]

The positive electrode includes a positive electrode current collector, and a positive electrode mixture layer containing a positive electrode active material and disposed on a surface of the positive electrode current collector. The positive electrode current collector is constituted of a sheet-like conductive material. The positive electrode current collector may be in the form of a long sheet. The positive electrode mixture layer is supported on one or both surfaces of the positive electrode current collector. The positive electrode mixture layer is usually a layer (including a membrane or film) constituted of a positive electrode mixture. The positive electrode mixture contains a positive electrode active material as an essential component. The positive electrode active material is a material that develops capacity through absorption and release of lithium ions thereinto and therefrom.

The positive electrode active material includes first composite oxide particles containing Li and Ni, and second composite oxide particles containing Li and Ni. The second composite oxide particles and the first composite oxide particles are different materials. The different materials means that the materials differing at least in a physical property other than the particle diameter. The first composite oxide particles and the second composite oxide particles differ in, for example, the composition of the composite oxide, the morphology of the particles, etc. Examples of the difference in the morphology of the particles include the cases where the average particle diameters of primary particles are clearly different (e.g., one is larger than the other by 1.5 times or more, even 2 times or more, or even 3 times or more), and where the photographed images are clearly different when observed with an optical instrument like an electron microscope, such as SEM or TEM.

The first composite oxide particles have a first average particle diameter D1 satisfying $1\ \mu m \leq D1 \leq 6\ \mu m$. The proportion of Ni in the metal elements other than Li in the first composite oxide particles (hereinafter sometimes referred to as a "first Ni ratio") is 50 at.% or more. By using the first composite oxide particles, the packing density of the positive electrode active material in the positive electrode mixture layer is improved. Furthermore, by setting the first Ni ratio to 50 at.% or more, particularly preferably to 80 at.% or more, the capacity density of the first composite oxide particles can be increased. Since the D 1 is relatively small, it is little necessary to make the primary particles of the first composite oxide particles so small in order to ensure output characteristics. In other words, it is easy to increase the durability by making the primary particles large. In this case, despite the D1 being relatively small, side reactions between the first composite oxide particles and the nonaqueous electrolyte are suppressed. The first average particle diameter D1 of the first composite oxide particles may be $5\ \mu m$ or less, and is particularly preferably $2\ \mu m$ or more and $5\ \mu m$ or less. The first composite oxide particles may have a layered rock-salt type crystal structure.

The first Ni ratio may be any value of 50 at.% or more, but is desirably 70 at.% or more, particularly desirably 80 at.% or more.

The first composite oxide particles desirably contain Mn. The proportion of Mn in the metal elements other than Li in the first composite oxide particles is desirably 1 at.% or more and 20 at.% or less, more desirably 2 at.% or more and 15 at.% or less. Mn is considered to contribute to achieving lower cost and higher capacity of the first composite oxide particles.

The first composite oxide particles may contain Co. The proportion of Co in the metal elements other than Li in the first composite oxide particles is desirably 0 at.% or more and 20 at.% or less, more desirably 2 at.% or more and 15 at.% or less. Co is considered to increase the compressive strength and the conductivity of the first composite oxide particles.

The first composite oxide particles may have a composition represented by, for example, $Li_aNi_{1-x-y}Co_xM_yO_2$, where $0 < a \leq 1.2$, $0 \leq x \leq 0.1$, $0 \leq y \leq 0.1$, $x + y \leq 0.2$, and M is at least one selected from the group consisting of Mn, W, Mg, Mo, Nb, Ti, Si, and Al. The value a representing the molar ratio of lithium increases or decreases during charging and discharging. Preferably, M contains at least Mn. Specific examples of the first composite oxide particles include a lithium-nickel-cobalt-manganese composite oxide (e.g., $LiNi_{0.85}Co_{0.10}Mn_{0.05}O_2$).

The second composite oxide particles have a second average particle diameter D2 satisfying $8\ \mu m \leq D2 \leq 20\ \mu m$. The proportion of Ni in the metal elements other than Li in the second composite oxide particles (hereinafter sometimes referred to as a "second Ni ratio") is 50 at.% or more. The D2 is larger than the D1. By using the second composite oxide particles together with the first composite oxide particles, the packing density of the positive electrode active material in the positive electrode mixture layer is improved, and this can prevent new surfaces from getting exposed, in association with the compression in the process of electrode plate production or with the occurrence of cracks in the second composite oxide particles due to expansion and contraction of the Si-containing material contained in the negative electrode during charging and discharging. Furthermore, by setting the second Ni ratio to 50 at.% or more, particularly preferably 80 at.% or more, the capacity density of the second composite oxide particles can be increased. Since the D2 is relatively large, it is necessary to make the primary particles of the second composite oxide particles small to some extent in order to ensure output characteristics. In other words, because of the necessity of making the primary particles small in order to ensure output characteristics, the durability tends to be lower than that of the first composite oxide particles. However, the first composite oxide particles, which hardly undergo particle cracking which is one of the factors to cause reduction of durability, have high durability, while the second composite oxide particles have excellent output characteristics. Therefore, when viewed as a whole, the durability of the positive electrode is remarkably improved. The second composite oxide particles may have a layered rock-salt type crystal structure.

The packing density of the positive electrode active material in the positive electrode mixture layer, for example, may be increased to 3.5 $g/cm^3$ or more, and may be increased to 3.55 $g/cm^3$ or more. In view of achieving both high capacity and high density, $3.55 \text{ g/cm}^3$ or more is desirable.

The second composite oxide particles desirably contain Al. The proportion of Al in the metal elements other than Li in the second composite oxide particles is desirably 0.1 at.% or more and 10 at.% or less, more desirably 1 at.% or more and 7 at.% or less. Al is considered to enhance the stability of the crystal structure and the output characteristics of the second composite oxide particles.

The second composite oxide particles may contain Co. The proportion of Co in the metal elements other than Li in the second composite oxide particles is desirably 0 at.% or more and 20 at.% or less, more desirably 1 at.% or more and 10 at.% or less. Co is considered to increase the compressive strength and the conductivity of the first composite oxide particles.

The second composite oxide particles may also have a composition represented by $Li_aNi_{1-x-y}Co_xM_yO_2$, where $0 < a \leq 1.2$, $0 \leq x \leq 0.1$, $0 \leq y \leq 0.1$, $x + y \leq 0.2$, and M is at least one member selected from the group consisting of Mn, W, Mg, Mo, Nb, Ti, Si, and Al. Preferably, M contains at least Co and Al. Specific examples of the second composite oxide particles include a lithium-nickel-cobalt-aluminum composite oxide (e.g., $LiNi_{0.85}Co_{0.10}Al_{0.05}O_2$).

The first average particle diameter D1 and the second average particle diameter D2 can be measured from a thickness-wise cross section of the positive electrode mixture layer and the positive electrode current collector cut together. The cross section may be formed using a cross section polisher (CP). In forming, a thermosetting resin may be filled into the positive electrode mixture layer and cured. Next, a scanning electron micrograph (hereinafter, an SEM image) of the cross section is photographed. The SEM image is photographed such that 10 or more first composite oxide particles and 10 or more second composite oxide particles can be observed. Since the first composite oxide particles differ from the second composite oxide particles in the composition or morphology, they can be visually distinguished from each other. Through image processing, first circle-equivalent diameters of the cross sections of all the first composite oxide particles included at least in an imaged region of $54 \ \mu\text{m}^2$ or more are measured, and an average value of them is determined as D1. Through image processing, second circle-equivalent diameters of the cross sections of all the second composite oxide particles are measured included at least in an imaged region of $54 \ \mu\text{m}^2$ or more are measured, and an average value of them is determined as D2. Here, the circle equivalent diameter refers to the diameter of a circle having the same area as that of a cross section of the particle (the area of the particle observed in the cross section of the positive electrode mixture layer). Note that when the electrode plate is compressed, the second composite oxide particles may be crushed to generate small particles. Such small particles, however, are not used as the particles for measuring the second average particle diameter D2. Particles that have been obviously cracked and crushed by the compression are also not used for the measurement of D1 and D2.

When the first composite oxide particles and the second composite oxide particles can be separated and recovered from the positive electrode mixture layer, the median diameter (D50: particle diameter at a cumulative volume of 50%) in a volume-based particle size distribution of each of the first and second composite oxide particles may be determined as D1 and D2. The volume-based particle size distribution can be measured by a laser diffraction scattering method. As the measuring instrument, for example, "LA-750" manufactured by Horiba, Ltd. (HORIBA) can be used.

The first composite oxide particles may be non-aggregated particles. The non-aggregated particles include particles separately present as one primary particle, and particles formed of several to dozens of primary particles (e.g., 2 to 19 particles) aggregated together. The non-aggregated particles, which are hardly pulverized and whose surface area therefore are unlikely to increase, are excellent in cycle characteristics. Such first composite oxide particles are hardly crushed when subjected to compression by rolling to form a positive electrode mixture layer. Therefore, the packing density of the positive electrode mixture layer can be easily enhanced by increasing the pressure when rolling.

The average particle diameter d1 of the primary particles of the non-aggregated particles is, for example, 1 $\mu\text{m}$ or more, and may be 1.5 $\mu\text{m}$ or more. The average particle diameter d1 may be, for example, 3 $\mu\text{m}$ or less.

The second composite oxide particles may be aggregated particles. The aggregated composite oxide particles refer to particles present as secondary particles each formed of dozens or more of primary particles (e.g., 20 or more particles) aggregated together. For example, the aggregated particles can be each constituted of 10,000 to 5,000,000 primary particles. The second composite oxide particles in an aggregated state have a small primary particle diameter d2 and tend to be pulverized easily, but on the other hand, have a large reaction area with nonaqueous electrolyte. Therefore, the output characteristics are excellent, and high capacity is likely to be achieved.

The average particle diameter d2 of the primary particles of the aggregated particles is, for example, 500 nm or less, and may be 300 nm or less. The average particle diameter d2 may be, for example, 100 nm or more.

The average particle diameters d1 and d2 of the primary particles of the first and second composite oxide particles can be determined by observing grain boundaries of the primary particles, based on a SEM photograph of each of the composite oxide particles. The SEM image for determining the average particle diameters d1 and d2 of the primary particles may be the same SEM image as used for determining the first average particle diameter D1 and the second average particle diameter D2. From the grain boundaries of a plurality of (e.g., 20 or more) selected primary particles, the contours thereof are identified, and the maximum diameter of each primary particle is determined from the contours, to calculate an average of the long diameters.

The compressive strength of the first composite oxide particles is, for example, 160 MPa or more. The compressive strength of the second composite oxide particles is, for example, 150 MPa or less. The compressive strength refers to, in the case of primary particles, a compressive strength per one primary particle, and in the case of secondary particles, a compressive strength per one secondary particle. The compressive strength (St) is calculated based on a mathematical expression $St = 2.8P / \pi d^2$ (P: load applied to particles, d: particle diameter) described in "Journal of the Mining and Metallurgical Institute of Japan"; Vol. 81, No. 932, December 1965; pp 1024-1030. Here, d represents the particle diameter of the secondary or primary particles, for which the particle diameter of the secondary particles is used when calculating the compressive strength of the secondary particles, and the particle diameter of the primary particles is used when calculating the compressive strength of the primary particles. The particle diameter is a diameter of an equivalent circle having an area surrounded by the contour of a particle image observed with a CCD or the like. Twenty particles are randomly selected, and the compressive strength of the selected secondary particles is measured using a micro compression tester, and an average value is determined as the compressive strength.

The first composite oxide particles have a BET specific surface area of, for example, 0.7 m$^2$/g or less. The second composite oxide particles have a BET specific surface area of, for example, 0.8 m$^2$/g or more. In this case, the output characteristics and the durability of the positive electrode are especially well balanced. The BET specific surface area is measured by a gas adsorption method (BET one-point method). Nitrogen gas is used as the gas. As the measuring instrument, for example, an automatic surface area and pore size distribution analyzer "TriStarII 3020" manufactured by Shimadzu Corporation can be used.

The positive electrode mixture layer may have a total pore volume of 0.1 mL/g or less, and a pore mode diameter of 0.7 $\mu$m or less. In a positive electrode mixture layer having such voids, usually, the permeability of nonaqueous electrolyte tends to be restricted, but according to the configuration of the present disclosure (esp., the configuration of the negative electrode), the permeability can be significantly improved. The total pore volume of the positive electrode mixture layer is measured using, for example, a mercury porosimeter. For example, "AutoPore IV9520" of Micromeritics Instrument Corporation is used as the measuring instrument. The measurement range (Pore Size) is 0.003 $\mu$m to 109.4 $\mu$m. Note that in order to remove impurities, the sample of the positive electrode mixture layer after cleaning is subjected to a heating vacuum evacuation (e.g., at 250 °C and 50 mTorr or less) pretreatment before measuring.

The content of the first composite oxide particles in the positive electrode active material is, for example, 5 mass% or more and 50 mass% or less, and may be 10 mass% or more and 45 mass% or less. On the other hand, the content of the second composite oxide particles contained in the positive electrode active material is, for example, 50 mass% or more and 95 mass% or less, and may be 55 mass% or more and 90 mass% or less. This optimizes the quantitative balance between the first composite oxide particles and the second composite oxide particles, making it easy to obtain a positive electrode with high durability, high capacity, and excellent output characteristics.

The contents of the first composite oxide particles and the second composite oxide particles in the positive electrode active material can be each determined by the following method through image analysis of a SEM photograph of a cross section of the positive electrode.

First, from the contour images of a first composite oxide particle and a second composite oxide particle in the SEM photograph, the area surrounded by each contour is determined. The diameter of a circle (equivalent circle) having the same area as that surrounded by the contour of the first composite oxide particle is determined as a particle diameter of each particle i, and the volume of a sphere having the same diameter is regarded as a volume Vi of each particle i. Similarly, the diameter of a circle (equivalent circle) having the same area as that of the contour of the second composite oxide particle is determined as a particle diameter of each particle j, and the volume of a sphere having the same diameter is regarded as a volume Vj of each particle j. When the positive electrode active material is substantially composed of two kinds of particles, the first composite oxide particles and the second composite oxide particles, given that the densities of the first and second composite oxide particles are respectively denoted by $\rho 1$ and $\rho 2$, a content C1 of the first composite oxide particles in a predetermined region can be determined by deriving the Vi or Vj, with respect to each particle present in the predetermined region in a cross-sectional SEM image of the positive electrode mixture layer, from the following equation. Similarly, a content C2 of the second composite oxide particles in a predetermined region can be determined by deriving the Vi or Vj, with respect to each particle present in the predetermined region in a cross-sectional SEM image of the positive electrode mixture layer, from the following equation.

$$C1 = \Sigma_i \rho 1 Vi / (\Sigma_i \rho 1 Vi + \Sigma_j \rho 2 Vj)$$

$$C2 = \Sigma_j \rho 2 Vj / (\Sigma_i \rho 1 Vi + \Sigma_j \rho 2 Vj)$$

The content of the first composite oxide particles may be derived by randomly selecting a plurality of (e.g., 20 or more) small regions in the positive electrode mixture layer, to determine the C1 in each small region, and determine an average value. Similarly, the content of the second composite oxide particles may be derived by randomly selecting a plurality of (e.g., 20 or more) small regions in the positive electrode mixture layer, to determine the C2 in each small region, and determine an average value.

Each composite oxide may have, on its particle surfaces, a compound containing at least one selected from Zr, Ti, B, Sr, Ca, W, Mg, Nb, and Al (hereinafter referred to as "metal element M") adhering thereto. An M compound containing the metal element M may be scattered on the particle surface of the composite oxide, or may be present in a layer so as to cover the entire particle surface. The thickness of the M compound layer is, for example, 0.1 to 5 nm. The M compound is considered to protect the surface of the composite oxide, and this suppresses the side reactions of the electrolyte on the particle surfaces of the composite oxide.

The M compound is an oxide, a hydroxide, or a carbonate. Specific examples of the M compound include $SrO$, $CaO$, $Sr(OH)_2$, $Ca(OH)_2$, $SrCO_3$, and $CaCO_3$. The amount of the M compound is, for example, 0.05 to 0.5 mol% in terms of the metal element M, relative to the total number of moles of the metal elements except Li constituting the composite oxide. The presence of the M compound can be confirmed by energy dispersive X-ray spectroscopy (TEM-EDX). The metal element M can be measured by performing ICP emission spectroscopy of a solution prepared by dissolving the composite oxide in fluoronitric acid.

The composite oxide is produced through a first step of obtaining a complex oxide containing, for example, Ni, a metal element M, etc., a second step of mixing the complex oxide and a Li raw material, to obtain a mixture, and a third step of firing the mixture. When allowing the M compound to adhere to the particle surfaces of the composite oxide, a raw material containing the metal element M (hereinafter, an "M raw material") may be added in the second step. The composition, the particle diameter, the BET specific surface area, etc. of the composite oxide and the M compound can be adjusted by controlling the raw material mixing ratio, the firing conditions in the third step, etc.

In the first step, to a solution of a metal salt containing metal elements, for example, Ni, metal element M, etc., under stirring, an alkaline solution such as sodium hydroxide is added dropwise, to adjust the pH to the alkali side (e.g., 8.5 to 12.5), thereby to allow a composite hydroxide containing metal elements to be deposited (coprecipitated). Afterward, the composite hydroxide is fired, to obtain a composite oxide containing Ni, the metal element M, etc. The firing temperature is, although not particularly limited, for example, 300 °C to 600 °C.

In the second step, the composite oxide obtained in the first step, a Li raw material, and, as necessary, an M raw material are mixed together, to obtain a mixture. Examples of the Li raw materials include $Li_2CO_3$, $LiOH$, $Li_2O_2$, $Li_2O$, $LiNO_3$, $LiNO_2$, $Li_2SO_4$, $LiOH \cdot H_2O$, $LiH$, and $LiF$. Examples of the M raw material include oxides, hydroxides, carbonates, nitrates, and sulfates of M. The mixing ratio of the composite oxide obtained in the first step and the Li raw material is adjusted such that the molar ratio of the metal elements other than Li to Li is, for example, 1 :0.98 to 1: 1.22. The mixing ratio of the composite oxide to the M raw material is adjusted such that the molar ratio of the metal elements other than Li to M is, for example, 1:0.0005 to 1:0.005. In order to facilitate the crystal growth, it is desirable to adjust the molar ratio of the metal elements other than Li to Li in the first composite oxide particles to be larger as compared to that in the second composite oxide particles, or to be, for example, 1: 1.1 to 1:1.2.

In the third step, the mixture obtained in the second step is fired at a predetermined temperature for a predetermined time, to obtain a fired product. The firing of the mixture is performed by a multi-stage firing process including, for example, a first firing process of firing the mixture in a firing furnace, under an oxygen gas flow, at a first temperature-raising rate to a first setting temperature of 450 °C or more and 680 °C or less, and a second firing process of, after the first firing step, firing the mixture in a firing furnace, under an oxygen gas flow, at a second temperature-raising rate to a second setting temperature of more than 680 °C and 800 °C or less. The first temperature-raising rate is 1.5 to 5.5 °C/min, and the second temperature-raising rate, which is slower than the first temperature-raising rate, may be set to 0.1 to 3.5 °C/min. Note that a plurality of temperature raising rates may be set in each firing process. The mixture may be molded into pellets and then fired, or may be pulverized after firing. In order to facilitate the crystal growth, the second set temperature for the first composite oxide particles is desirably set higher than that for the second composite oxide particles, or to be, for example, 800 °C.

The holding time of the first set temperature in the first firing process is, for example, 0 to 5 hours, or 0 to 3 hours. The holding time of the set temperature means the time for maintaining a set temperature after reaching the set temperature. The holding time of the second set temperature in the second firing step is, for example, 1 to 10 hours, or 1 to 5 hours. The firing of the mixture may be performed under an oxygen gas flow having an oxygen concentration of 60% or more, with the flow rate of the oxygen gas flow set to 0.2 to 4 mL/min per 10 $cm^3$ of the firing furnace, and 0.3 L/min or more per 1 kg of the mixture. The fired product may be subjected to washing with water, dehydration, and drying, to remove impurities. In order to facilitate the crystal growth, the holding time of the second set temperature for the first composite oxide particles is desirably set longer than that for the second composite oxide particles, or to be, for example, 10 hours.

Without added in the second step, the M raw material may be added in the third step or in washing the fired product with water or drying, and then, subjected to a heat treatment performed, for example, at 150 to 400 °C for 0.5 to 15 hours in a vacuum atmosphere, and thus, the M compound may be allowed to adhere to the particle surfaces of the composite oxide.

The positive electrode mixture layer is formed by, for example, applying a positive electrode slurry in which a positive electrode mixture containing a positive electrode active material, a binder, and the like are dispersed in a dispersion medium, onto a surface of a positive electrode current collector, and dried, followed by rolling the dry applied film. The positive electrode mixture contains a positive electrode active material as an essential component, and may contain a binder, a conductive material, and the like, as optional components. The conductive material forms favorable conductive paths in the positive electrode mixture layer and contributes to reducing the resistance of the positive electrode mixture layer. For the binder, the conductive material, and the like, known materials can be used. As the conductive material, a particulate conductive agent may be used, and a fibrous conductive agent may be used. Examples of the particulate conductive agent include carbon black, such as acetylene black and Ketjen black, and graphite. Examples of the fibrous conductive agent include carbon nanotubes (CNTs), vapor-grown carbon fibers (VGCFs), electrospun carbon fibers, polyacrylonitrile (PAN)-based carbon fibers, pitch-based carbon fibers, and graphene.

In particular, CNTs are considered to form favorable conductive paths in the positive electrode mixture layer and connect particles of each composite oxide to each other, to promote the durability improvement effect by the first composite oxide. The content of the CNTs may be, for example, 0.01 to 5 mass%, more preferably 0.04 to 2 mass%, or 0.06 to 0.8 mass%, relative to the total mass of the positive electrode mixture layer. When the content of the CNTs is within this range, the cycle characteristics can be efficiently improved. The positive electrode mixture layer may contain only CNTs as a conductive agent.

In another aspect, the content of the conductive material is, for example, 1 part by mass or less relative to 100 parts by mass of the positive electrode active material (positive electrode active material in a discharged state). The content of the CNTs may be 0.01 parts by mass or more and 1 part by mass or less, or 0.02 parts by mass or more and 0.5 parts by mass or less, relative to 100 parts by mass of the positive electrode active material.

Preferred as the conductive material are carbon black, carbon nanotubes (CNTs), and the like. The proportion of the CNTs in the conductive material is, for example, 50 mass% or more, preferably 66 mass% or more and 100 mass% or less (e.g., 80 to 100 mass%, or 90 to 100 mass%).

The average fiber length of the CNTs is, for example, 0.5 $\mu$m or more, preferably 0.7 $\mu$m or more, more preferably 0.8 $\mu$m or more, or 1 $\mu$m or more. The upper limit of the average fiber length of the CNTs is, although not particularly limited, for example, 20 $\mu$m or less, and may be 10 $\mu$m, or 5 $\mu$m. A suitable range of the average fiber length of the CNTs, for example, 1 to 10 $\mu$m, or 1 to 5 $\mu$m. With the average fiber length of the CNTs within the above range, the cycle characteristics can be more effectively enhanced as compared to when using CNTs whose average fiber length is outside the above range. The average fiber length of the CNTs is determined by image analysis using a scanning electron microscope (SEM). The average fiber length of the CNTs can be determined by, for example, measuring the lengths of randomly selected a plurality of (e.g., 100) CNTs, and averaging them. The fiber length refers to a length of the CNT when straightened.

The average fiber diameter (outer diameter) of the CNTs is, for example, 50 nm or less, preferably 40 nm or less, more preferably 25 nm or less, or 20 nm or less, and may be 15 nm or less. The lower limit of the average fiber diameter of CNTs is, although not particularly limited, for example, 1 nm, or 5 nm. A suitable range of the average fiber diameter of the CNTs is 1 to 20 nm, or 5 to 20 nm. With the average fiber diameter of the CNTs within the above range, the cycle characteristics can be more effectively enhanced as compared to when using CNTs whose average fiber diameters are outside the above range. The average fiber diameter of the CNTs is determined by image analysis using a transmission electron microscope (TEM). The average fiber diameter can be determined by, for example, measuring the fiber diameters of randomly selected a plurality of (e.g., 100) CNTs, and averaging them.

With the CNTs as described above, the positive electrode active material and the positive electrode current collector can come in linear contact with each other, rather than in point-to-point contact, and therefore, the output characteristics are improved. Furthermore, since the CNTs occupy only a small volume in the positive electrode mixture layer, the proportion of the positive electrode active material in the positive electrode mixture layer is likely to be increased. The CNTs may be single-walled CNTs (SWCNTs), double-walled CNTs (DWCNTs), or multi-walled CNTs (MWCNTs), and may include at least two of them. Preferred among them are MWCNTs. Examples of the MWCNTs include CNTs with a tubular structure in which a graphene sheet consisting of six-membered carbon rings is wound parallel to the fiber axis, CNTs with a platelet structure in which a graphene sheet consisting of six-membered carbon rings is arranged perpendicularly to the fiber axis, and CNTs with a herringbone structure in which a graphene sheet consisting of six-membered carbon rings is wound at an oblique angle to the fiber axis. Two or more kinds of CNTs may be added in the positive electrode mixture layer.

As the positive electrode current collector, a non-porous electrically conductive substrate (e.g., metal foil), a porous electrically conductive substrate (e.g., mesh, net, punched sheet), and the like can be used. The thickness of the positive electrode current collector is, for example, 5 $\mu$m or more and 30 $\mu$m or less, may be 10 $\mu$m or more and 25 $\mu$m or less, and may be 15 $\mu$m or more and 20 $\mu$m or less. The material for the positive electrode current collector may be, for example, stainless steel, aluminum, an aluminum alloy, titanium, and the like.

[Negative electrode]

The negative electrode includes a negative electrode current collector, and a negative electrode mixture layer containing a negative electrode active material disposed on a surface of the negative electrode current collector. The negative electrode current collector is constituted of a sheet-like conductive material. The negative electrode current collector may be in the form of a long sheet. The negative electrode mixture layer is supported on one or both surfaces of the negative electrode current collector. The negative electrode mixture layer is usually a layer (including a membrane or film) constituted of a negative electrode mixture. The negative electrode mixture contains a negative electrode active material as an essential component. The negative electrode active material is a material that develops capacity through absorption and release of lithium ions thereinto and therefrom.

The negative electrode active material includes a graphite material and a Si-containing material. The graphite material includes graphite particles (first graphite particles) having an internal void percentage (first internal void percentage P1), and graphite particles (second graphite particles) having an internal void percentage (second internal void percentage P2). Here, P1 < P2, the P1 is 5% or less, and the P2 is more than 5%.

The first graphite particles and the second graphite particles are different materials. Here, the first graphite particles and the second graphite particles differ, for example, in particle morphology. Examples of the difference in particle morphology include the cases where the degrees of crystallinity (e.g., the interplanar spacing d002 of the (002) plane) of graphite are clearly different (e.g., one is higher than the other by 1.05 times or more), where the degrees of circularity are clearly different (e.g., one is higher than the other by 1.05 times or more), and where the photographed images are clearly different when observed with an optical instrument like an electron microscope, such as SEM or TEM.

The internal voids refer to voids closed within the graphite particle, and are differentiated from external voids communicating with the external space of the graphite particle. The first internal void percentage P1 may be 4% or less. The second internal void percentage may be 6% or more and 25% or less, and is particularly preferably 8% or more and 20% or less.

Graphite is a carbonaceous material with a developed graphite-like crystal structure. Although those having an interplanar spacing d002 of the (002) plane measured by X-ray diffractometry of, for example, 0.340 nm or less are classified as graphite, the interplanar spacing d002 is desirably 0.3354 nm or more. The crystallite size Lc (002) of the graphite may be, for example, 5 nm or more, and may be 5 nm or more and 200 nm or less. The crystallite size Lc (002) is measured by, for example, the Scherrer method. When the interplanar spacing d002 of the (002) plane and the crystallite size Lc (002) of the graphite are within the above ranges, a high capacity is likely to be obtained.

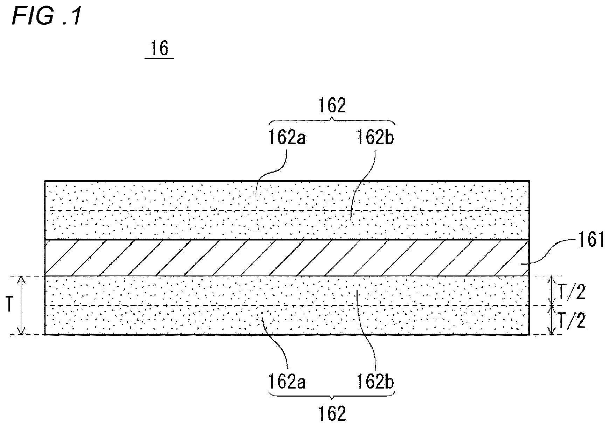

FIG. 1 is a schematic diagram of a cross section of a graphite particle used in a nonaqueous liquid electrolyte secondary battery according to an embodiment of the present invention. A graphite particle Gr has an internal void G1 closed within the graphite particle Gr, and an external void G2 communicating with the external space of the graphite particle Gr. The external void G2 is included in the gaps between the negative electrode active material particles.

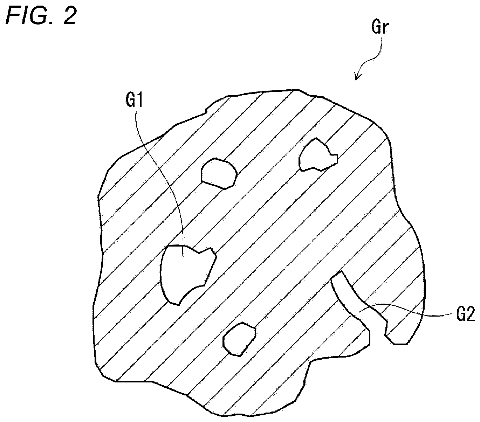

The internal void percentage of the graphite particles Gr means the ratio of an area SC2 of the internal void G1 to an area SC1 of the graphite particle Gr in a cross section of the graphite particle Gr, and is calculated as (SC2 / SC1) × 100. The area SC1 of the graphite particle Gr is the area of a region surrounded by the outer periphery of the graphite particle Gr, and means the combined area of a carbon material portion (the shaded area in FIG. 2) and the internal void G1. When there are a plurality of internal voids G1, the area SC2 of the internal void G1 means the sum of the areas of the plurality of internal voids G1.

The internal void percentage of the graphite particle can be determined by the following method. An initial battery (unused battery or battery subjected to charge and discharge a few times) is disassembled, to take out the negative electrode, and part of the negative electrode is sampled, to obtain a sample cross section of the negative electrode mixture layer, using an ion milling machine or the like. As the ion milling machine, for example, "IM4000PLUS" manufactured by Hitachi High-Tech Corporation can be used. A plurality of graphite particles may be embedded in an epoxy resin or the like and polished to obtain a cross section of the plurality of graphite particles, which may be used as a sample cross section. A backscattered electron image (magnification: 3,000 to 5,000 times) of the sample cross section is photographed using a scanning electron microscope (SEM), to obtain a cross-sectional image of the sample. The cross-sectional image of the sample obtained above is imported into a computer, and subjected to a binarization process. For the binarization process of the cross-sectional image, for example, image analysis software "ImageJ" manufactured by the National Institutes of Health can be used. In the binarization process, in the cross-sectional image, graphite particles (including internal voids) are shown in black, and gaps between particles are shown in white.

Using the binarized cross-sectional image, graphite particles having a maximum diameter of 5 $\mu$m or more and 50 $\mu$m or less are randomly selected. The area SC1 of the graphite particle and the area SC2 of the internal void of the graphite particle are calculated. Note that, in image analysis, it is difficult in some cases to discern whether a minute void having a maximum diameter of 3 $\mu$m or less is an internal void or an external void. Therefore, a void with a maximum diameter of 3 $\mu$m or less is regarded as an internal void.

Using the area SC1 of the graphite particle and the area SC2 of the internal void obtained above, the internal void percentage (%) of the graphite particle is calculated from the following equation.

$$\text{Internal void percentage of graphite particle} = (SC2 \, / \, SC1) \times 100$$

The graphite particle with an internal void percentage of 5% or less is defined as a first graphite particle, and the graphite particle with an internal void percentage of more than 5% is defined as second graphite particles. The average value of the internal void percentage of 10 first graphite particles is determined as the first internal void percentage P1. The average value of the internal void percentage of 10 second graphite particles is determined as the second internal void percentage P2.

When the negative electrode mixture layer is divided into a first region and a second region having the same thickness, and the first region is closer to the positive electrode than the second region, the first graphite particles are contained more in the first region than in the second region. A content (mass%) C11 of the first graphite particles contained in the negative electrode active material in the first region may be greater than a content (mass%) C21 of the first graphite particles contained in the negative electrode active material in the second region. The C21 may be 0 mass%. The C11 may be twice or more as large as the C21. The first graphite particles having a small internal void percentage are less likely to be pulverized when compressed by rolling in forming a negative electrode mixture layer. Therefore, the passage for the nonaqueous electrolyte is likely to be secured in the first region. That is, the first region has a higher permeability of nonaqueous electrolyte than the second region, and can function as a reservoir of the nonaqueous electrolyte to be supplied to the positive electrode mixture layer during rapid charging. Moreover, since the Si-containing material is contained in the negative electrode mixture layer, the degree of expansion and contraction of the negative electrode mixture layer increases, so that the Si-containing material acts as a pump, allowing the nonaqueous electrolyte to be supplied smoothly from the negative electrode mixture layer to the positive electrode mixture layer. The C11 and the C21 may be determined, similarly to the contents C1 and C2 of the first and second composite oxide particles in the positive electrode mixture layer, by determining a circle equivalent diameter from a contour image of the first and the second graphite particle in a SEM photograph, followed by calculation using the density of each particle, with the volume of each particle regarded as the volume of a sphere having the same diameter.

In view of enhancing the above effect, an average value Pf of the internal void percentage of the graphite material included in the first region is set to 14% or less. The average value Pf is set smaller than an average value Ps of the internal void percentages of the graphite material included in the second region. When the average value Pf is set to 14% or less, even smaller to 5% or less, the function of the first region as a reservoir for the nonaqueous electrolyte is enhanced. Moreover, by setting to Pf < Ps, the nonaqueous electrolyte in the first region is supplied to the positive electrode mixture layer more preferentially than that in the second region. The Pf/Ps may be any value of less than 1, but is preferably 0.7 or less.

The average values Pf and Ps can be determined by the following method. An initial battery (unused battery or battery subjected to charge and discharge a few times) is disassembled, to take out the negative electrode, and part of the negative electrode is embedded in an epoxy resin or the like and polished, to obtain a sample cross section of the negative electrode mixture layer. A backscattered electron image (magnification: 3,000 to 5,000 times) of the sample cross section is photographed using a scanning electron microscope (SEM), to obtain a cross-sectional image of the sample. The cross-sectional image of the sample obtained above is imported into a computer, and subjected to binarization process. For the binarization process of the cross-sectional image, for example, image analysis software "ImageJ" manufactured by the National Institutes of Health can be used. In the binarization process, in the cross-sectional image, graphite particles (including internal voids) are shown in black, and gaps between particles are shown in white.

Next, the binarized cross-sectional image is divided into 10 equal parts in the thickness direction of the negative electrode mixture layer. In each of 5 regions (i = 1 to 5) included in the first region, an area Sf1 of all the graphite particles and an area Sf2 of the internal void in all the graphite particles are calculated, to calculate $(Sf2/Sf1)_i$. Here again, a void with a maximum diameter of 3 $\mu$m or less is regarded as an internal void.

Using the $(Sf2/Sf1)_i$ obtained above, the average value Pf (%) of the internal void percentage of the graphite material included in the first region is calculated from the following equation.

$$Pf = 100 \times \{\Sigma(Sf2/Sf1)_i\} \, / \, 5$$

Similarly, in each of 5 regions (i =1 to 5) included in the second region, an area Ss1 of all the graphite particles and an area Ss2 of the internal void in all the graphite particles are calculated, to calculate $(Ss2/Ss1)_i$. Here again, a void with a maximum diameter of 3 $\mu$m or less is regarded as an internal void.

Using the $(Ss2/Ss1)_i$ obtained above, the average value Pf (%) of the internal void percentage of the graphite material included in the first region is calculated from the following equation.

$$Ps = 100 \times \{\Sigma(Ss2/Ss1)_i\} / 5$$

FIG. 2 is a schematic cross-sectional diagram of the negative electrode. A negative electrode plate 16 includes a sheet-like negative electrode current collector 161 and a negative electrode mixture layer 162 having a thickness T formed on each of both surfaces of the negative electrode current collector 161. The negative electrode mixture layer 162 can be divided into two layers, a first region 162a and a second region 162b, having the same thickness, and the first region 162a is closer to the positive electrode than the second region 162b. That is, the first region and the second region each have a thickness of T/2. The first region 162a is a half region of the negative electrode mixture layer 162 on the negative electrode surface side, and the second region 162b is a half region of the negative electrode mixture layer 162 on the negative electrode current collector 161 side. The first graphite particles are contained more in the first region than in the second region, and the second graphite particles are contained more in the second region than in the first region.

When the first graphite particles with low internal void percentage is contained more in the first region near the positive electrode, the ability to retain nonaqueous electrolyte on the surface side of the negative electrode mixture layer is improved. This allowed for smooth transfer of nonaqueous electrolyte between the positive electrode and the negative electrode, leading to remarkable improvement in rapid charge-discharge cycle characteristics. Such an effect becomes apparent when the packing density of the positive electrode mixture layer is remarkably increased. The packing density of the positive electrode active material in the positive electrode mixture layer is increased by using the first composite oxide particles and the second composite oxide particles differing in a physical property and the average particle diameter. The packing density of the positive electrode active material in the positive electrode mixture layer is, for example, 3.5 g/cm$^3$ or more, and may be 3.55 g/cm$^3$ or more. When the nonaqueous electrolyte is abundantly retained in such a state in the first region of the negative electrode mixture layer, the electrolyte permeability in the positive electrode mixture layer is remarkably improved. This is presumably because when a small amount of nonaqueous electrolyte is supplied from the first region into a small number of voids or gaps, the percentage increase of nonaqueous electrolyte in the positive electrode mixture layer is increased, and the influence of the supplied nonaqueous electrolyte is also increased. Such an effect is especially noticeable when the negative electrode contains a Si-containing material and expands and contracts greatly during charging and discharging. In addition, the effect is noticeable when the positive electrode mixture layer and the negative electrode mixture layer are thick. This is presumably because the thicker the mixture layer is, the more the Li reaction tends to unevenly occur in the thickness direction, which accelerates the deterioration in durability due to the reduction in electrolyte permeability in the positive electrode.

On the other hand, the second graphite particles may be contained more in the second region than in the first region. A content (mass%) C22 of the second graphite particles in the negative electrode active material in the second region may be greater than a content (mass%) C12 of the second graphite particles the negative electrode active material in the first region. The C22 may be twice or more as large as the C12. The second graphite particles having a large internal void percentage are densely packed in the second region when the negative electrode mixture layer is formed through compression by rolling, and thus, serve to increase the negative electrode capacity. The C12 may be 0 mass%, but in view of increasing the capacity of the negative electrode, the first region desirably contains the second graphite particles in an area near the second region. The C12 and the C22 may be determined, similarly to the C11 and the C21, by determining a circle equivalent diameter from a contour image of the first and the second graphite particle in a SEM photograph, followed by calculation using the density of each particle, with the volume of each particle regarded as the volume of a sphere having the same diameter.

In other words, when the negative electrode mixture layer is zoned into a first layer and at least one other layer other than the first layer differing in morphology from each other, and the first layer is closest to the positive electrode, the first graphite particles are preferably contained most in the first layer. The content of the first graphite particles in the negative electrode active material in the first layer may be 90 mass% or more, and may be 100 mass%. The content of the second graphite particles in the first layer may be 0 mass%.

When the thickness of the negative electrode mixture layer is denoted by T, the thickness of the first layer may be, for example, 0.1T or more, and may be 0.2T or more. The thickness of the first layer may be, for example, 0.5T or less, may be 0.4T or less, and may be 0.3T or less. The thickness T of the negative electrode mixture layer is, for example, 65 μm or more on one side, preferably 70 to 120 μm on one side.

Each of the layers other than the first layer may or may not contain the first graphite particles. The content of the first graphite particles in the negative electrode active material in each of the layers other than the first layer may be, for example, 30 mass% or less, may be 10 mass% or less, and may be 0 mass%.

The first graphite particles may have a BET specific surface area of 2.0 m$^2$/g or less, or 1.5 m$^2$/g or less. The second graphite particles may have a BET specific surface area of 3.0 m$^2$/g or more, or 4.0 m$^2$/g or more. In this case, the first graphite particles are less likely to be crushed during rolling in the first region or the first layer, and the second graphite particles are more likely to be more densely packed in the second region. The BET specific surface area is measured by a gas adsorption method (BET one-point method). Nitrogen gas is used as the gas. As the measuring instrument, for example, an automatic surface area and pore size distribution analyzer "TriStarII 3020" manufactured by Shimadzu Corporation can be used.

The average particle diameters of the first graphite particles and the second graphite particles may be each, for example, 1 $\mu$m or more and 30 $\mu$m or less, or 12 $\mu$m or more and 25 $\mu$m or less. The average particle diameters of the first graphite particles and the second graphite particles are each determined as the median diameter (D50: particle diameter at 50% cumulative volume) in a volume-based particle size distribution. The volume-based particle size distribution can be measured by a laser diffraction scattering method. As the measuring instrument, for example, "LA-750" manufactured by Horiba, Ltd. (HORIBA) can be used. Alternatively, as in the case of the D1 and the D2, a circle equivalent diameter may be measured from a contour image of the first and the second graphite particle in a cross-sectional SEM photograph, and determined as an average value of them.

The first graphite particles can be produced, for example, by the following method. Coke (precursor) serving as a main raw material is pulverized, and a binder is added to the pulverized material, to aggregate the pulverized material. The average particle diameter (D50) of the pulverized material of the coke is, for example, 12 $\mu$m or more and 20 $\mu$m or less. The obtained aggregated material is fired, graphitized, and sieved, to obtain first graphite particles of a desired size. The firing temperature is, for example, 2600 °C or more, and may be 2600 °C or more and 3000 °C or less.

The internal void percentage P1 of the first graphite particles can be controlled by, for example, the particle diameter etc. of the pulverized material or aggregated material of coke. For example, to reduce the internal void percentage P1, the particle diameter of pulverized material or aggregated material of coke may be increased. In the case where part of a binder contained in the aggregated material evaporates during firing, the internal void percentage P1 may be controlled by the amount of the binder added. Such a binder is exemplified by pitch.

The second graphite particles can be produced, for example, by the following method. Coke (precursor) as a principal material is pulverized, and a binder is added to the pulverized material, to aggregate the pulverized material. The average particle diameter (D50) of the pulverized material of the coke is, for example, 12 $\mu$m or more and 20 $\mu$m or less. The obtained aggregated material is pressure-molded, to obtain a block-shaped molded body, which is then fired and graphitized. The firing temperature is, for example, 2600 °C or more, and may be 2600 °C or more and 3000°C or less. The density of the molded body is, for example, 1.6 g/cm$^3$ or more and 1.9 g/cm$^3$ or less. The obtained block-shaped graphitized material is pulverized, and sieved, to obtain second graphite particles of a desired size.

The internal void percentage P2 of the second graphite particles may be controlled by the particle diameter etc. of the pulverized material or aggregated material of coke. When a volatile component is added to the block-shaped molded body during firing, the internal void percentage P2 of the second graphite particles may be controlled by the amount of the volatile component added to the block-shaped molded body. In the case where part of a binder added to the pulverized coke evaporates during firing, the binder may also serve as a volatile component added to the molded body. In this case, the internal void percentage P2 may be controlled by the amount of the binder added. Such a binder is exemplified by pitch. For example, the amount of the pitch added to the pulverized material in the process of producing second graphite particles may be set higher than that of the pitch added to the pulverized material in the process of producing first graphite particles, so that second graphite particle having a larger void percentage than that of the first graphite particles can be produced.

The negative electrode mixture layer is formed by, for example, applying a negative electrode slurry in which a negative electrode mixture containing a negative electrode active material, a binder, and the like are dispersed in a dispersion medium, onto a surface of a negative electrode current collector, and dried, following by rolling the dry applied film. The negative electrode mixture contains a negative electrode active material as an essential component, and may contain a binder, a conductive material, a thickener, and the like, as optional components. For the binder, the conductive material, the thickener, and the like, known materials can be used.

The negative electrode active material may include, in addition to the first and second graphite particles, a material that electrochemically absorbs and releases lithium ions, examples of which include a carbon material other than graphite, such as easily graphitizable carbon (soft carbon) and non-graphitizable carbon (hard carbon), and an alloy-type material. The alloy-type material contains at least one metal (e.g., Si, Sn, Sb, Ge) capable of forming an alloy with lithium. The content of the material that electrochemically absorbs and releases lithium ions other than the first and second graphite particles in the negative electrode active material is desirably 15 mass% or less, particularly desirably 5 mass% or more and 10 mass% or less.

As the alloy-type material, Si-containing particles are preferred because they have high capacity and the raw material is inexpensive, and in particular, a composite material containing a lithium-ion conductive phase and a silicon phase dispersed therein is desirable. Examples of the lithium-ion conductive phase include a Si oxide phase containing silicon dioxide as a major component (e.g., 95 to 100 mass%), a silicate phase, and a carbon phase constituted of carbon with low crystallinity (e.g., amorphous carbon). Specifically, a composite material containing a Si oxide phase and a silicon phase dispersed therein (hereinafter, SiO), a composite material containing a silicate phase and a silicon phase dispersed therein (hereinafter, LSX), a composite material containing a carbon phase and a silicon phase dispersed therein (hereinafter, Si-C), and the like are preferably used. Preferred among them is SiO in terms of its high durability. LSX is preferred in terms of its high capacity and low irreversible capacity. The average particle diameter (D50) of the alloy-type material is, for example, 1 $\mu$m or more and 15 $\mu$m or less.

SiO and LSX are, for example, particles whose D50 is smaller than that of graphite. The D50 of SiO and LSX may be 3 $\mu$m and 10 $\mu$m. A conductive layer constituted of a highly conductive material may be formed on the surfaces of SiO and LSX particles. A preferred example of the conductive layer is a carbon film constituted of a carbon material. The thickness of the conductive layer is preferably 1 to 200 nm, or 5 to 100 nm, in consideration of ensuring the conductivity and the diffusion of lithium ions into the particles.

SiO has a particle structure in which fine Si particles are dispersed in a Si oxide phase. A preferred SiO has a sea-island structure in which fine Si particles are substantially uniformly dispersed in a matrix of amorphous Si oxide, and is represented by a general formula $SiO_x$, where $0 < x \leq 2$ or $0.8 \leq x \leq 1.6$. The Si oxide phase is constituted of an aggregation of particles finer than Si particles. The content of the Si particles is preferably 35 to 75 mass%, relative to the total mass of SiO, in view of achieving both high battery capacity and excellent cycle characteristics.

The average particle diameter of the Si particles dispersed in the Si oxide is, for example, 500 nm or less, preferably 200 nm or less, or 50 nm or less, before charging and discharging. After charging and discharging, it is, for example, 400 nm or less or 100 nm or less. The average particle diameter of the Si particles is determined by observing cross sections of the SiO particles using a SEM or a transmission electron microscope (TEM), and determined as an average value of the longest diameters of 100 Si particles.

LSX may have a particle structure in which fine Si particles are dispersed in a silicate phase. A preferred LSX has a sea-island structure in which fine Si particles are substantially uniformly dispersed in a lithium silicate matrix. The lithium silicate phase is constituted of an aggregation of particles finer than Si particles. The content of the Si-containing particles is, likewise that of the SiO, preferably 35 to 75 mass% relative to the total mass of the LSX. The average particle diameter of the Si particles is, for example, 500 nm or less, preferably 200 nm or less, or 50 nm or less, before charging and discharging.

The lithium silicate phase is preferably constituted of a compound represented by a general formula $Li_{2z}SiO_{(2+z)}$, where $0 < z < 2$. That is, it is desirable that the lithium silicate phase contains no $Li_4SiO_4$ ($z = 2$). $Li_4SiO_4$ is an unstable compound and reacts with water to exhibit alkalinity, and therefore, may alter the chemical properties of Si, to cause a decrease in charge and discharge capacity. In view of stability, ease of preparation, Li-ion conductivity, etc., the lithium silicate phase preferably contains $Li_2SiO_3$ ($z = 1$) or $Li_2Si_2O_5$ ($z = 1/2$) as a major component. When $Li_2SiO_3$ or $Li_2Si_2O_5$ is contained as a major component, the content of the major component is preferably more than 50 mass%, more preferably 80 mass% or less, relative to the total mass of the lithium silicate phase.

Si-C contains a carbon phase and Si particles dispersed in the carbon phase. In view of achieving a high capacity, etc., a preferred content of the Si particles in the Si-C is preferably 30 mass% or more and 80 mass% or less, more preferably 35 mass% or more and 75 mass% or less, still more preferably 55 mass% or more and 70 mass% or less. In view of suppressing the fracture of an electrode plate during the production of the electrode plate, the carbon phase preferably contains no crystalline carbon in the Si-C particles in order to improve the strength. A preferred average particle diameter of the Si particles is generally 500 nm or less, and is preferably 200 nm or less, more preferably 100 nm or less, before charging and discharging. After charging and discharging, it is preferably 400 nm or less, more preferably 100 nm or less. The average particle diameter of the silicon particles can be measured by observing cross sections of the Si-C particles using a SEM or TEM, specifically, determined as an average value of the longest diameters of 100 silicon particles.

The silicate phase may contain, for example, at least one element selected from the group consisting of a Group I element and a Group II element in the long form of the periodic table. Examples of the Group I element and the Group II element in the long form of the periodic table include lithium (Li), potassium (K), sodium (Na), magnesium (Mg), and calcium (Ca), strontium (Sr), and barium (Ba). Other elements, such as aluminum (Al), boron (B), lanthanum (La), phosphorus (P), zirconium (Zr), and titanium (Ti), may be contained. In particular, a lithium silicate phase is preferred because of its small irreversible capacity and high initial charge-discharge efficiency.

The lithium silicate phase is an oxide phase containing lithium (Li), silicon (Si), and oxygen (O), and may contain other elements. The atomic ratio O/Si of O to Si in the lithium silicate phase is, for example, more than 2 and less than 4. The O/Si is preferably more than 2 and less than 3. The atomic ratio Li/Si of Li to Si in the lithium silicate phase is, for example, more than 0 and less than 4. The lithium silicate phase can have a composition represented by a formula: $Li_{2z}SiO_{2+z}$, where $0 < z < 2$. Preferably, z satisfies $0 < z < 1$, and more preferably $z = 1/2$.

Examples of the binder include fluorocarbon-based resin, polyacrylonitrile (PAN), polyimide-based resin, acrylic resin, polyolefin-based resin, styrene-butadiene rubber (SBR), carboxymethyl cellulose (CMC) or a salt thereof, polyacrylic acid (PAA) or a salt thereof (which may be PAA-Na, PAA-K, etc., and a partially neutralized salt), and polyvinyl alcohol (PVA). These may be used singly or in combination of two or more kinds.

Examples of the conductive material include carbon-based particles, such as carbon black (CB), acetylene black (AB), Ketjen black, carbon nanotubes (CNTs), and graphite. These may be used singly or in combination of two or more kinds.

An example of a method for producing a negative electrode mixture layer will be described. For example, a negative electrode active material containing first graphite particles and a Si-containing material, a binder, etc. are mixed together with a solvent such as water, to prepare a negative electrode mixture slurry for the first region. To the slurry, for example, second graphite particles may be added in order to adjust the average value of the internal void percentage of the graphite particles. In addition, separately from the slurry, a negative electrode active material containing second graphite particles and a Si-containing material, a binder, etc. are mixed with a solvent such as water, to prepare a negative electrode mixture slurry for the second region. To the slurry, for example, first graphite particles may be added in order to adjust the average value of the internal void percentage of the graphite particles. Then, the negative electrode mixture slurry for the second region is applied onto both surfaces of the negative electrode current collector, and dried. Afterward, the negative electrode mixture slurry for the first region is applied onto the applied films of the negative electrode mixture slurry for the second region on both surfaces, and dried. This forms negative electrode mixture layers. The above method corresponds to the case where, after the negative electrode mixture slurry for the second region is applied and then dried, the negative electrode mixture slurry for the first region is applied. However, the method is not limited thereto. After the negative electrode mixture slurry for the second region is applied and before drying, the negative electrode mixture slurry for the first region may be applied, or the negative electrode mixture slurry for the second region and the negative electrode mixture slurry for the first region may be simultaneously applied.

As the negative electrode current collector, a non-porous electrically conductive substrate (e.g., metal foil), a porous electrically conductive substrate (e.g., mesh, net, punched sheet), and the like can be used. The material of the negative electrode current collector may be, for example, stainless steel, nickel, a nickel alloy, copper, a copper alloy, and the like. The thickness of the negative electrode current collector is, for example, 5 $\mu$m or more and 30 $\mu$m or less, may be 8 $\mu$m or more and 20 $\mu$m or less, and may be 10 $\mu$m or more and 15 $\mu$m or less.

[Nonaqueous electrolyte]

The nonaqueous electrolyte contains a nonaqueous solvent and a solute dissolved in the nonaqueous solvent. The solute is an electrolyte salt that ionically dissociates in a nonaqueous solvent. The solute includes, for example, a lithium salt.

As the nonaqueous solvent, for example, a chain nitrile, a cyclic ether, a chain ether, a cyclic carbonic acid ester, a chain carbonic acid ester, a cyclic carboxylic acid ester, a chain carboxylic acid ester, and the like can be used. Examples of the cyclic carbonic acid ester include vinylethylene carbonate (VEC), propylene carbonate (PC), ethylene carbonate (EC), vinylene carbonate (VC), and fluoroethylene carbonate (FEC). Examples of the chain carbonic acid ester include diethyl carbonate (DEC), ethyl methyl carbonate (EMC), and dimethyl carbonate (DMC). Examples of the cyclic carboxylic acid ester include $\gamma$-butyrolactone (GBL), and $\gamma$-valerolactone (GVL). Examples of the chain carboxylic acid ester include methyl acetate, ethyl acetate, propyl acetate, methyl propionate (MP), and ethyl propionate (EP). The nonaqueous solvent may be used singly or in combination of two or more kinds. Examples of the chain nitrile include acetonitrile, propionitrile, butyronitrile, isobutyronitrile, pivalonitrile, succinonitrile, adiponitrile, and pimelonitrile, and these may be used singly or in combination of two or more kinds. Examples of the cyclic ether include 1,3-dioxolane, 1,4-dioxolane, tetrahydrofuran, and 2-methyltetrahydrofuran, and these may be used singly or in combination of two or more kinds. Examples of the chain ether include 1,2-dimethoxyethane, diethylene glycol dimethyl ether, diethylene glycol diethyl ether, and diethylene glycol dibutyl ether, and these may be used singly or in combination of two or more kinds.

As the lithium salt, for example, $LiSO_3CF_3$, lithium difluorooxalate borate, lithium bisoxalate borate, $LiPF_6$, $LiPF_2O_2$, $LiBF_4$, $LiSbF_6$, $LiAsF_6$, $LiCF_3SO_3$, $LiCF_3CO_2$, $LiClO_4$, $LiAlCl_4$, $LiB_{10}Cl_{10}$, $LiN(FSO_2)_2$, $LiN(CF_3SO_2)_2$, $LiN(CF_3SO_2)(C_4F_9SO_2)$, $LiN(C_2F_5SO_2)_2$, LiCl, LiBr, LiI, and the like can be used. The lithium salt may be used singly, or in combination of two or more kinds.

The concentration of the lithium salt in the nonaqueous electrolyte may be 1 mol/liter or more and 2 mol/liter or less, and may be 1 mol/liter or more and 1.5 mol/liter or less. In this case, a nonaqueous electrolyte having excellent ion conductivity and appropriate viscosity can be obtained. The lithium salt concentration is not limited to the above.

The nonaqueous electrolyte may contain an additive, in addition to a nonaqueous solvent and an electrolyte salt. As the additive, for example, a sulfonate ester, a sulfate ester, a sulfite ester, and an isocyanate compound, and the like can be used. Examples of the sulfonate ester include 1,3-propane sultone (PS), 1,4-butane sultone, 1,3-propene sultone (PRES), and 1,4-butene sultone. Examples of the sulfate ester include ethylene sulfate. Examples of the sulfite ester include ethylene sulfite. Examples of the isocyanate compound include 1,6-diisocyanatohexane (hexamethylene diisocyanate), and 1,3-bis(isocyanatomethyl)cyclohexane. In the nonaqueous electrolyte, the additive content may be, for example, 0.01 mass% or more and 5 mass% or less.

[Separator]

The separator is excellent in ion permeable and has moderate mechanical strength and electrically insulating properties. As the separator, for example, a microporous thin film, a woven fabric, a nonwoven fabric, and the like can be used. The material of the separator is preferably a polyolefin, such as polypropylene and polyethylene. A separator whose surface is coated with a material, such as aramid resin or ceramic, may be used.

[Nonaqueous electrolyte secondary battery]

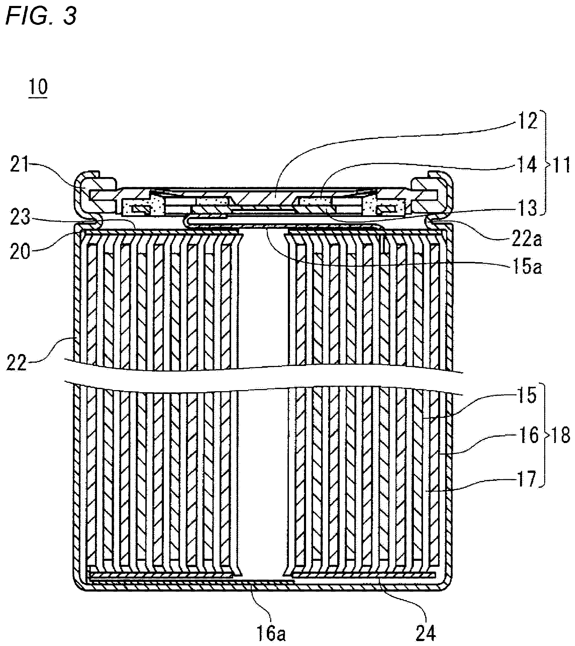

FIG. 3 is a longitudinal cross-sectional view of a cylindrical nonaqueous electrolyte secondary battery according to an embodiment of the present disclosure. The present disclosure, however, is not limited to the following configuration. A nonaqueous electrolyte secondary battery 10 includes an electrode group 18, a liquid electrolyte (not shown), and a bottomed cylindrical battery can 22 housing them. A sealing body 11 is crimped onto the opening of the battery can 22, with a gasket 21 interposed therebetween. This seals the inside of the battery. The sealing body 11 has a valve body 12, a metal plate 13, and an annular insulating member 14 interposed between the valve body 12 and the metal plate 13. The valve body 12 and the metal plate 13 are connected to each other at their respective centers. A positive electrode lead 15a led out from the positive electrode plate 15 is connected to the metal plate 13. Thus, the valve body 12 functions as an external terminal of the positive electrode. A negative electrode lead 16a led out from the negative electrode plate 16 is connected to the bottom inner surface of the battery can 22. An annular groove 22a is formed in the vicinity of the open end of the battery can 22. A first insulating plate 23 is disposed between one of the end surfaces of the electrode group 18 and the annular groove 22a. A second insulating plate 24 is disposed between the other end surface of the electrode group 18 and the bottom of the battery can 22. The electrode group 18 is formed by winding a positive electrode plate 15 and a negative electrode plate 16 with a separator 17 interposed therebetween.

The present disclosure will be more specifically described below with reference to Examples and Comparative Examples. It is to be noted, however, that the present disclosure is not limited to the following Examples.

<Example 1>

[Preparation of positive electrode]

First composite oxide particles having a composition represented by $LiNi_{0.85}Co_{0.10}Mn_{0.05}O_2$ (first Ni ratio = 85%) were prepared, which had a first average particle diameter D1 of 5 $\mu$m and an average particle diameter d1 of the primary particles of 2 $\mu$m as measured by the already-described method from an SEM image of a longitudinal cross section of the positive electrode mixture layer produced by the procedure described below, and a BET specific surface area of 0.6 $m^2$/g and a compressive strength of 170 MPa as measured by the already-described method, and were non-aggregated particles.

Second composite oxide particles having a composition represented by $LiNi_{0.85}Co_{0.10}Al_{0.05}O_2$ (first Ni ratio = 85%) were prepared, which had a second average particle diameter D2 of 12 $\mu$m and an average particle diameter d1 of the primary particles of 0.4 $\mu$m as measured by the already-described method from an SEM image of a longitudinal cross section of the positive electrode mixture layer produced by the procedure described below, and a BET specific surface area of 1.0 $m^2$/g and a compressive strength of 130 MPa as measured by the already-described method, and were aggregated particles.

The median diameters in volume-based particle size distributions of the first composite oxide particles and the second composite oxide particles each measured by a laser diffraction scattering method using "LA-750" manufactured by Horiba, Ltd. (HORIBA) before the production of the positive electrode were approximately equal to the first average particle diameter D1 and the second average particle diameter D2, respectively.

A positive electrode slurry was prepared by mixing 100 parts by mass of a 4:6 mixture by mass of the first composite oxide particles and the second composite oxide particles (i.e., positive electrode active material), 0.5 parts of MWCNTs (average fiber length 0.9 $\mu$m, average fiber diameter 20 nm), 0.6 parts by mass of acetylene black, 0.6 parts by mass of polyvinylidene fluoride, and an appropriate amount of N-methyl-2-pyrrolidone (NMP). The content C1 of the first composite oxide particles and the content C2 of the second composite oxide particles in the positive electrode active material were therefore 40 mass% and 60 mass%, respectively. These numerical values were almost equal to the contents C1 and C2 determined by the already-described method.

Next, the positive electrode slurry was applied onto a surface of an aluminum foil serving as a positive electrode current collector, and an applied film was dried, and then rolled, to form a positive electrode with a positive electrode mixture layer (thickness on one surface: 87.5 $\mu$m) on each of both surface of the aluminum foil. The packing density of the positive electrode active material in the positive electrode mixture layer after rolling was 3.55 $g/cm^3$, the pore mode diameter determined by the already-described method was 0.30 $\mu$m, and the total pore density in the range of 3 nm to

109.4 μm was 0.08 mL/g.

[Synthesis of first graphite particles]

Coke (precursor) serving as a main raw material was pulverized, to obtain a pulverized material having an average particle diameter D50 of 12 μm. Pitch was added as a binder to the pulverized material, to aggregate the pulverized material into an aggregated material having an average particle diameter D50 of 18 μm. The aggregated material was fired at a temperature of 2800 °C, to be graphitized. The obtained graphitized material was sieved, to give first graphite particles having an average particle diameter D50 of 23 μm.

The internal void percentage P1 of the first graphite particles as measured by the already-described method from an SEM image of a thickness-wise cross section of the negative electrode mixture layer produced by the procedure described below was set to 3%. The internal void percentage P1 was adjusted by changing the amount of the pitch added during the production process of first graphite particles. The BET specific surface area of the first graphite particles as measured by the already-described method was 1.5 $m^2$/g.

[Synthesis of second graphite particles]

Coke (precursor) serving as a main raw material was pulverized, to obtain a pulverized material having an average particle diameter D50 of 15 μm. Pitch was added as a binder to the pulverized material, to aggregate the pulverized material, and the obtained aggregated material was compression-molded into a block-shaped molded body having a density of 1.6 $g/cm^3$ to 1.9 $g/cm^3$. The obtained block-shaped molded body was fired at a temperature of 2800 °C, to be graphitized. The obtained graphitized material was pulverized, and sieved, to give second graphite particles having an average particle diameter D50 of 23 μm.

The internal void percentage P2 of the second graphite particles as measured by the already-described method from an SEM image of a thickness-wise cross section of the negative electrode mixture layer produced by the procedure described below was set to 15%. The internal void percentage P2 was adjusted by changing the amount of pitch added during the production process of second graphite particles. The BET specific surface area of the second graphite particles as measured by the already-described method was 4.0 $m^2$/g.

[Preparation of first negative electrode slurry]

A first negative electrode mixture was prepared by mixing 100 parts by mass of a first negative electrode active material which was a 95:5 mixture by mass of first graphite particles and an alloy-type material, 1 part by mass of styrene-butadiene copolymer rubber (SBR), and 1 part by mass of carboxymethyl cellulose (CMC). An appropriate amount of water was added to the first negative electrode mixture, to prepare a first negative electrode slurry. For the alloy-type material, $SiO_x$ particles (x = 1, average particle diameter D50 = 5 μm) whose surfaces were coated with a conductive carbon were used as a Si-containing material. The coating amount of the conductive carbon was 5 parts by mass per total 100 parts by mass of the $SiO_x$ particles and the conductive carbon.

[Preparation of second negative electrode slurry]

A second negative electrode slurry similar to the first negative electrode slurry was prepared, except that second graphite particles were used instead of the first graphite particles.

[Preparation of negative electrode]

The second negative electrode slurry was applied onto both surfaces of a copper foil (thickness 10 μm) serving as a negative electrode current collector, and after drying the applied film, the first negative electrode slurry was applied thereon, followed by drying the coating film. For the application of the first negative electrode slurry and the second negative electrode slurry, a doctor blade method was used. The applied amounts of the first negative electrode slurry and the second negative electrode slurry were set the same. The applied amount of the negative electrode slurry refers to the mass of the negative electrode slurry applied per unit area of the negative electrode current collector.

The dry applied film with two-layered structure was rolled, to produce a negative electrode having negative electrode mixture layer (thickness on one surface: 91 μm) on each of both surfaces of the negative electrode current collector. The packing density of the negative electrode active material in the negative electrode mixture layer after rolling was 1.5 $g/cm^3$. The average value Pf and the average value Ps as measured by the already-described method were 13% and 20%, respectively.

[Preparation of nonaqueous electrolyte]

LiPF$_6$ was added as a lithium salt in a mixed solvent containing fluoroethylene carbonate (FEC), ethyl methyl carbonate (EMC), and dimethyl ether (DME) in a volume ratio of 4:1:15, to prepare a nonaqueous electrolyte. The LiPF$_6$ concentration in the nonaqueous electrolyte was set to 1.0 mol/liter.

[Preparation of nonaqueous electrolyte secondary battery]

With a lead tab attached to each electrode, the positive electrode and the negative electrode were spirally wound with a separator therebetween, so that the lead was placed at the outermost layer. An electrode group was thus produced. The electrode group was inserted into an outer body made of a laminated film having an aluminum foil as a barrier layer, and dried under vacuum at 105 °C for 2 hours, into which the nonaqueous electrolyte was injected, followed by sealing of the opening of the outer body. A battery A1 was thus obtained.

<Example 2>

A negative electrode was produced in the same manner as in Example 1, except that, in the preparation of a first negative electrode slurry, a 90:10 mixture by mass of the first graphite particles and the alloy-type material was used, and in the preparation of a second negative electrode slurry, a 90:10 mixture by mass of the second graphite particles and the alloy-type material was used. Except for using this negative electrode, a battery A2 was obtained in the same manner as in Example 1. The average value Pf and the average value Ps as measured by the already-described method were 5% and 20%, respectively.

<Example 3>

A positive electrode was prepared in the same manner as in Example 1, except that, in the preparation of a positive electrode slurry, 0.5 parts by mass of MWCNTs (average fiber length 0.9 $\mu$m, average fiber diameter 20 nm) were used relative to 100 parts by mass of the positive electrode active material, and the acetylene black was not used. Except for using this positive electrode, a battery A3 was obtained in the same manner as in Example 2. The packing density of the positive electrode active material in the positive electrode mixture layer after rolling was 3.55 g/cm$^3$, the pore mode diameter determined by the already-described method was 0.35 $\mu$m, and the total pore volume in the range of 3 nm to 109.4 $\mu$m was 0.08 mL/g.

<Example 4>

A positive electrode was prepared in the same manner as in Example 3, except that, in the preparation of a positive electrode slurry, instead of the MWCNTs, 0.1 parts by mass of SWCNTs (average fiber length 3 $\mu$m, average fiber diameter 10 nm) were used relative to 100 parts by mass of the positive electrode active material. Except for using this positive electrode, a battery A4 was obtained in the same manner as in Example 2. The packing density of the positive electrode active material in the positive electrode mixture layer after rolling was 3.55 g/cm$^3$, the pore mode diameter determined by the already-described method was 0.50 $\mu$m, and the total pore volume in the range of 3 nm to 109.4 $\mu$m was 0.08 mL/g.

<Comparative Example 1>

A negative electrode was produced in the same manner as in Example 2, except that, in the production of a negative electrode, only the second negative electrode slurry was used. The applied amount of the second negative electrode slurry was set the same as the total applied amount of the first and second negative electrode slurries in Example 1, and the thickness of the negative electrode mixture layer was set the same as that in Example 1. Except for using this negative electrode, a battery B1 was obtained in the same manner as in Example 3.

<Comparative Example 2>

A positive electrode was prepared in the same manner as in Example 3, except that, in the preparation of a positive electrode slurry, 100 parts by mass of the second composite oxide particles were used instead of the 4:6 mixture by mass of the first composite oxide particles and the second composite oxide particles. The packing density of the positive electrode active material in the positive electrode mixture layer after rolling was 3.55 g/cm$^3$ as in Example 1. The pore mode diameter determined by the already-described method was 0.6, and the total pore volume in the range of 3 nm to 109.4 μm was 0.08 mL/g. Except for using this positive electrode, a battery B2 was obtained in the same manner as in Comparative Example 1.

<Comparative Example 3>

A positive electrode was produced in the same manner as in Example 3, except that, in the preparation of a positive electrode slurry, 100 parts by mass of the second composite oxide particles were used instead of the 4:6 mixture by mass of the first composite oxide particles and the second composite oxide particles. Except for using this positive electrode, a battery B3 was obtained in the same manner as in Example 2.

<Comparative Example 4>

A positive electrode was prepared in the same manner as in Example 3, except that, in the preparation of a positive electrode slurry, 100 parts by mass of the first composite oxide particles were used instead of the 4:6 mixture by mass of the first composite oxide particles and the second composite oxide particles. The packing density of the positive electrode active material in the positive electrode mixture layer after rolling was 3.55 g/cm$^3$, the pore mode diameter determined by the already-described method was 0.20, and the total pore volume in the range of 3 nm to 109.4 μm was 0.08 mL/g. Except for using this positive electrode, a battery B4 was obtained in the same manner as in Comparative Example 1.

<Comparative Example 5>

A positive electrode was produced in the same manner as in Example 3, except that, in the preparation of a positive electrode slurry, 100 parts by mass of the first composite oxide particles were used instead of the 4:6 mixture by mass of the first composite oxide particles and the second composite oxide particles. Except for using this positive electrode, a battery B4 was obtained in the same manner as in Example 3.

<Comparative Example 6>

A negative electrode was produced in the same manner as in Example 3, except that, in the production of a negative electrode, only the first negative electrode slurry was used. The applied amount of the first negative electrode slurry was set the same as the total applied amount of the first and second negative electrode slurries in Example 1, and the thickness of the negative electrode mixture layer was set the same as that in Example 1. Except for using this negative electrode, a battery B6 was obtained in the same manner as in Example 3.

[Evaluation]

(Initial capacity)

With respect to each of the completed batteries, in a 25 °C environment, a constant-current charging was performed at a current of 0.3 It until the voltage reached 4.2 V, and then a constant-voltage charging was performed at a constant voltage of 4.2 V until the current reached 0.02 It. Then, a constant-current discharging was performed at a current of 0.5 It until the voltage reached 2.5 V, to calculate a ratio $C_0 = C/C_{A1}$ by percentage relative to a discharge capacity $C_{A1}$ in Example 1, as an initial capacity $C_0$.

(Capacity retention rate during rapid charge-discharge cycles)

In a 25°C environment, charge-discharge cycles were repeated, each cycle consisting of a constant-current charging performed at a current of 0.5 It until the voltage reached 4.2 V, followed by a constant-voltage charging performed at a constant voltage of 4.2 V until the current reached 0.02 It, and a constant-current discharging performed at a current of 1.0 It until the voltage reached 2.5V. The rest time between charging and discharging was set to 10 minutes. The charge-discharge cycles were repeated 50 times, to determine a discharge capacity $C_{50}$ at the 50th cycle. A ratio $Ri = C_{50}/C$ by percentage of the discharge capacity $C_{50}$ to an initial discharge capacity C was evaluated as a capacity retention rate $R_1$.

[Table 1]

| | positive electrode | | | | negative electrode | | | evaluation | |
|---|---|---|---|---|---|---|---|---|---|
| | first composite oxide | second composite oxide | conductive material | packing density (g/cm$^3$) | first graphite | second graphite | Si-containing material | $C_0$ (%) | 0.5C/1.0C capacity retention rate $R_1$ (%) |
| A1 | 40 | 60 | MWCNTs/AB | 3.55 | 47.5 | 47.5 | 5 | 100 | 99 |
| A2 | 40 | 60 | MWCNTs/AB | 3.55 | 45 | 45 | 10 | 100 | 99 |
| A3 | 40 | 60 | MWCNTs | 3.55 | 45 | 45 | 10 | 100 | 98 |
| A4 | 40 | 60 | SWCNTs | 3.55 | 45 | 45 | 10 | 100 | 96 |
| B1 | 40 | 60 | MWCNTs | 3.55 | 0 | 90 | 10 | 100 | 85 |
| B2 | 0 | 100 | MWCNTs | 3.55 | 0 | 90 | 10 | 100 | 85 |
| B3 | 0 | 100 | MWCNTs | 3.55 | 45 | 45 | 10 | 100 | 84 |
| B4 | 100 | 0 | MWCNTs | 3.30 | 0 | 90 | 10 | 98 | 80 |
| B5 | 100 | 0 | MWCNTs | 3.30 | 45 | 45 | 10 | 98 | 80 |
| B6 | 40 | 60 | MWCNTs | 3.55 | 90 | 0 | 10 | 96 | 87 |

The evaluation results of the initial capacity $C_0$ and the capacity retention rate Ri in the batteries A1 to A4 and B1 to B6 are shown in Table 1. Table 1 shows that, in the batteries A1 to A4, the capacity retention rate during rapid charge-discharge cycles was remarkably improved. On the other hand, when only one of the first and second composite oxides was used, it was difficult to improve the initial capacity.

[Industrial Applicability]

According to the secondary battery of the present disclosure, a nonaqueous electrolyte secondary battery with high capacity and excellent durability can be provided. The nonaqueous electrolyte secondary battery according to the present disclosure is useful as a main power source for mobile communication devices, portable electronic devices, hybrid cars, electric cars, and others.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

10: nonaqueous electrolyte secondary battery, 11: sealing body, 12: valve body, 13: metal plate, 14: insulating member, 15: positive electrode plate, 15a: positive electrode lead, 16: negative electrode plate, 16a: negative electrode lead, 17: separator, 18: electrode group, 21: gasket, 22: battery can, 22a: groove, 23: first insulating plate, 24: second insulating plate, 16: negative electrode, 161: negative electrode current collector, 162: negative electrode mixture layer, 162a: first region, 162b: second region, Gr: graphite particle, G1: internal void, G2: external void

## Claims

1. A nonaqueous electrolyte secondary battery, comprising:
   a positive electrode; a negative electrode; and a nonaqueous electrolyte, wherein:

   the positive electrode includes a positive electrode current collector, and a positive electrode mixture layer containing a positive electrode active material and disposed on a surface of the positive electrode current collector;
   the positive electrode active material includes first composite oxide particles containing Li and Ni, and second composite oxide particles containing Li and Ni;
   the first composite oxide particles have a first average particle diameter D1 satisfying $1\ \mu m \leq D1 \leq 6\ \mu m$, and a proportion of Ni in metal elements other than Li in the first composite oxide particles is 50 at.% or more;
   the second composite oxide particles have a second average particle diameter D2 satisfying $8\ \mu m \leq D2 \leq 20\ \mu m$, and a proportion of Ni in metal elements other than Li in the second composite oxide particles is 50 at.% or more;
   the negative electrode includes a negative electrode current collector, and a negative electrode mixture layer containing a negative electrode active material and disposed on a surface of the negative electrode current collector;
   the negative electrode active material includes a graphite material, and a Si-containing material;
   the graphite material includes first graphite particles having a first internal void percentage P1 and second graphite particles having a second internal void percentage P2 satisfying P1 < P2;
   when the negative electrode mixture layer is divided into a first region and a second region having the same thickness, and the first region is closer to the positive electrode than the second region, the first graphite particles are contained more in the first region than in the second region;
   an average value Pf of the internal void percentage of the graphite material contained in the first region is 14% or less; and
   the average value Pf is smaller than an average value Ps of the internal void percentage of the graphite material contained in the second region.

2. The nonaqueous electrolyte secondary battery according to claim 1, wherein the second graphite particles are contained more in the second region than in the first region.

3. The nonaqueous electrolyte secondary battery according to claim 1 or 2, wherein when the negative electrode mixture layer is zoned into a first layer and at least one other layer other than the first layer differing in morphology from each other, and the first layer is closest to the positive electrode, the first graphite particles is contained most in the first layer.

4. The nonaqueous electrolyte secondary battery according to any one of claims 1 to 3, wherein the first graphite particles have a BET specific surface area of 2.0 m$^2$/g or less.

5. The nonaqueous electrolyte secondary battery according to any one of claims 1 to 4, wherein the second graphite particles have a BET specific surface area of 3.0 m$^2$/g or more.

6. The nonaqueous electrolyte secondary battery according to any one of claims 1 to 5, wherein the internal void percentage of the first graphite particles is 5% or less.

7. The nonaqueous electrolyte secondary battery according to any one of claims 1 to 6, wherein the internal void percentage of second graphite particles is 6% or more.

8. The nonaqueous electrolyte secondary battery according to any one of claims 1 to 7, wherein a content of the Si-containing material in the negative electrode active material is 1 mass% or more and 15 mass% or less.

9. The nonaqueous electrolyte secondary battery according to any one of claims 1 to 8, wherein a content of the first composite oxide particles in the positive electrode active material is 5 mass% or more and 50 mass% or less.

10. The nonaqueous electrolyte secondary battery according to any one of claims 1 to 9, wherein a content of the second composite oxide particles in the positive electrode active material is 50 mass% or more and 95 mass% or less.

11. The nonaqueous electrolyte secondary according to any one of claims 1 to 10, wherein the positive electrode mixture layer has a total pore volume of 0.1 mL/g or less, and a pore mode diameter of 0.7 $\mu$m or less.

12. The nonaqueous electrolyte secondary battery according to any one of claims 1 to 11, wherein the first composite oxide particles are non-aggregated particles.

13. The nonaqueous electrolyte secondary battery according to claim 12, wherein an average particle diameter d1 of primary particles of the non-aggregated particles is 1 $\mu$m or more.

14. The nonaqueous electrolyte secondary battery according to any one of claims 1 to 13, wherein the second composite oxide particles are aggregated particles.

15. The nonaqueous electrolyte secondary battery according to claim 14, wherein an average particle diameter d2 of primary particles of the aggregated particles is 500 nm or less.

16. The nonaqueous electrolyte secondary battery according to any one of claims 1 to 15, wherein the first composite oxide particles have a compressive strength of 160 MPa or more.

17. The nonaqueous electrolyte secondary battery according to any one of claims 1 to 16, wherein the second composite oxide particles have a compressive strength of 150 MPa or less.

18. The nonaqueous electrolyte secondary battery according to any one of claims 1 to 17, wherein the first composite oxide particles have a BET specific surface area of 0.7 m$^2$/g or less.

19. The nonaqueous electrolyte secondary battery according to any one of claims 1 to 18, wherein the second composite oxide particles have a BET specific surface area of 0.8 m$^2$/g or more.

20. The nonaqueous electrolyte secondary battery according to any one of claims 1 to 19, wherein

the first composite oxide particles contain Mn, and
the second composite oxide particles contain Al.

*FIG .1*

*FIG. 2*

FIG. 3

## INTERNATIONAL SEARCH REPORT

| International application No. |
|---|
| **PCT/JP2022/035831** |

| A. | CLASSIFICATION OF SUBJECT MATTER |
|---|---|

*H01M 10/052*(2010.01)i; *H01M 4/133*(2010.01)i; *H01M 4/36*(2006.01)i; *H01M 4/38*(2006.01)i; *H01M 4/505*(2010.01)i; *H01M 4/525*(2010.01)i; *H01M 4/587*(2010.01)i
FI: H01M10/052; H01M4/133; H01M4/36 D; H01M4/36 E; H01M4/38 Z; H01M4/505; H01M4/525; H01M4/587

According to International Patent Classification (IPC) or to both national classification and IPC

| B. | FIELDS SEARCHED |
|---|---|

Minimum documentation searched (classification system followed by classification symbols)

H01M10/052; H01M4/133; H01M4/36; H01M4/38; H01M4/505; H01M4/525; H01M4/587

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2021/059706 A1 (PANASONIC INTELLECTUAL PROPERTY MANAGEMENT CO., LTD.) 01 April 2021 (2021-04-01)<br>claims, paragraphs [0021]-[0043], example 1 | 1-20 |
| Y | WO 2019/239652 A1 (SANYO ELECTRIC CO., LTD.) 19 December 2019 (2019-12-19)<br>claims, paragraphs [0020]-[0032], example 1 | 1-20 |
| Y | JP 2011-216485 A (SAMSUNG SDI CO., LTD.) 27 October 2011 (2011-10-27)<br>claims, example 1 | 1-20 |
| Y | JP 2021-507497 A (LG CHEM, LTD.) 22 February 2021 (2021-02-22)<br>claims, example 1 | 1-11, 18-20 |
| Y | JP 2021-99955 A (PANASONIC CORP.) 01 July 2021 (2021-07-01)<br>claims, paragraphs [0033], [0034] | 4-5 |
| Y | WO 2010/140260 A1 (TOYOTA JIDOSHA KABUSHIKI KAISHA) 09 December 2010 (2010-12-09)<br>claims | 11 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 November 2022** | **22 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/035831**

**C.    DOCUMENTS CONSIDERED TO BE RELEVANT**

| Category* | Citation of document, with indication, where appropriate, of the relevant passages | Relevant to claim No. |
|---|---|---|
| Y | WO 2019/097951 A1 (PANASONIC INTELLECTUAL PROPERTY MANAGEMENT CO., LTD.) 23 May 2019 (2019-05-23)<br>claims, paragraphs [0021]-[0030] | 12-17 |
| Y | WO 2019/167558 A1 (PANASONIC INTELLECTUAL PROPERTY MANAGEMENT CO., LTD.) 06 September 2019 (2019-09-06)<br>claims, paragraph [0025] | 18-19 |

Form PCT/ISA/210 (second sheet) (January 2015)

## INTERNATIONAL SEARCH REPORT
### Information on patent family members

International application No.

**PCT/JP2022/035831**

| Patent document cited in search report | Publication date (day/month/year) | Patent family member(s) | Publication date (day/month/year) |
|---|---|---|---|
| WO 2021/059706 A1 | 01 April 2021 | EP 4037014 A1 claims, paragraphs [0021]-[0043], example 1<br>CN 114430864 A | |
| WO 2019/239652 A1 | 19 December 2019 | US 2021/0159489 A1 claims, paragraphs [0024]-[0044], example 1<br>EP 3809492 A1 claims, paragraphs [0020]-[0034], example 1<br>CN 112292773 A | |
| JP 2011-216485 A | 27 October 2011 | US 2011/0240913 A1 claims, example 1<br>EP 2372819 A2 claims, example 1<br>CN 102208642 A<br>KR 10-2011-0109879 A | |
| JP 2021-507497 A | 22 February 2021 | US 2020/0388830 A1 claims, example 1<br>EP 3712990 A1 claims, example 1<br>KR 10-2019-0093453 A<br>CN 111492510 A | |
| JP 2021-99955 A | 01 July 2021 | US 2021/0193991 A1 claims, paragraphs [0040], [0041]<br>CN 113097444 A | |
| WO 2010/140260 A1 | 09 December 2010 | US 2012/0070709 A1 claims<br>CN 102460778 A<br>KR 10-2012-0023849 A | |
| WO 2019/097951 A1 | 23 May 2019 | US 2020/0373574 A1 claims, paragraphs [0023]-[0032]<br>EP 3712992 A1 claims, paragraphs [0021]-[0030]<br>CN 111344886 A | |
| WO 2019/167558 A1 | 06 September 2019 | US 2020/0411842 A1 claims, paragraph [0028]<br>EP 3761406 A1 claims, paragraph [0025]<br>CN 111656578 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011216485 A

- JP 5868604 B

**Non-patent literature cited in the description**

- *Journal of the Mining and Metallurgical Institute of Japan,* December 1965, vol. 81 (932), 1024-1030